(19) Europäisches Patentamt
European Patent Office
Office européen des brevets

(11) Numéro de publication: **0 427 645 A1**

# (12) DEMANDE DE BREVET EUROPEEN

(21) Numéro de dépôt: **90420479.9**

(51) Int. Cl.5: **B29B 13/10**, C08J 3/12

(22) Date de dépôt: **06.11.90**

Le titre de l'invention a été modifié (Directives relatives à l'examen pratiqué à l'OEB, A-III, 7.3)

(30) Priorité: **10.11.89 FR 8915011**

(43) Date de publication de la demande:
**15.05.91 Bulletin 91/20**

(84) Etats contractants désignés:
**AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Bartlet, Philippe**
**39, rue Clément-Michut**
**F-69100 Villeurbanne(FR)**
Inventeur: **Moissonnier, Philippe**
**52, rue Bortzaris**
**F-75019 Paris(FR)**

(74) Mandataire: **Trolliet, Maurice et al**
**RHONE-POULENC CHIMIE Service Brevets**
**Chimie Centre de Recherches des Carrières**
**B.P. 62**
**F-69192 Saint-Fons Cédex(FR)**

## (54) Procédé de préparation de poudres de polymère thermotrope par extrusion-granulation-broyage, et les poudres fines et coulables obtenues.

(57) La présente invention concerne un procédé de préparation de poudres fines et coulables, à partir de polymères thermotropes qui sont capables de former des masses fondues anisotropes.

Ce procédé est mis en oeuvre en enchaînant des opérations d'extrusion, de granulation et de broyage connues de l'homme de métier, mais en choisissant des conditions particulières de températures pour la conduite de l'opération d'extrusion selon lesquelles le polymère fondu à une température $T_1$ supérieure à la température de fusion $T_F$ (à laquelle apparaît la phase de cristal liquide) est refroidi avant son entrée dans la filière à une température $T_2$ inférieure à $T_F$.

La présente invention concerne encore des granulés compacts et des poudres fines constituées de particules sphériques, faits à partir de polymères thermotropes et dont la structure intime est non fibrillaire.

Les poudres fines obtenues conviennent notamment pour des applications telles que l'enduction électrostatique ou en lit fluidisé.



Xerox Copy Centre

## PROCEDE DE PREPARATION DE POUDRES DE POLYMERE THERMOTROPE PAR EXTRUSION-GRANULATION-BROYAGE, LES GRANULES CONDUISANT PAR BROYAGE A CES POUDRES ET LES POUDRES FINES ET COULABLES OBTENUES

La présente invention concerne un procédé de préparation de poudres fines et coulables à partir de polymères thermotropes qui sont capables de former des masses fondues anisotropes, ledit procédé consistant à broyer des granulés obtenus par une technique d'extrusion-granulation qui est spéciale dans la conduite de sa partie extrusion. La présente invention concerne également des granulés, susceptibles d'être formés intermédiairement dans le procédé précité, conduisant par broyage aux poudres visées. Elle concerne enfin des poudres fines et coulables, susceptibles d'être obtenues à l'issue de ce procédé.

Depuis une dizaine d'années, il se développe un intérêt qui va en grandissant à l'égard des polymères qui sont capables de former des masses fondues anisotropes ; on parle encore de polymères qui sont capables de former à l'état fondu des phases de cristal liquide (ou mésophase organisée). Ces polymères possèdent différentes températures de transition de phase qui sont, par ordre croissant de températures :

- la température de cristallisation au refroidissement ($T_c$) ;
- la température de fusion ($T_F$) à laquelle apparaît la phase de cristal liquide ; et
- la température de clarification ($T_{cl}$) au delà de laquelle la mésophase devient isotrope. Ces températures $T_c$, $T_F$ et $T_{cl}$ sont déteminées par analyse calorimétrique différentielle (DSC), à l'aide d'un appareil DU PONT comprenant un module DSC 910 couplé à une unité centrale de traitement 9900, sur des échantillons soumis à des variations de température tant en montée qu'en descente de 20 °C/minute ; les températures de cristallisation et de fusion correspondent aux sommets de l'exotherme de cristallisation au refroidissement et de l'endotherme de fusion. La nature des phases en présence est identifiée par des observations au moyen d'un microscope polarisant équipé d'une platine chauffante. L'étendue en températures de la plage d'anisotropie, intervalle qui peut être représenté par la différence $T_{cl}$ - $T_F$ et qui a une valeur allant d'une dizaine de degrés à plusieurs dizaines de degrés, va dépendre essentiellement de la structure du polymère thermotrope.

L'intérêt à l'égard des polymères thermotropes dont on a parlé ci-avant est lié au fait que ces polymères possèdent à l'état fondu, de manière spontanée, une orientation propre et un degré relativement élevé d'organisation. Cette orientation et cette organisation se retrouvent dans les objets conformés obtenus à partir de ces polymères en leur conférant des propriétés physico-chimiques et mécaniques améliorées que l'on n'observe pas sur des objets identiques mais isotropes. Cependant, étant données cette orientation et cette organisation spontanées de la matière à l'état fondu, la transformation de ces polymères thermotropes par extrusion :

- lorsqu'il s'agit de confectionner des objets différents de fils et de fibres et consistant dans des profilés comme par exemple des joncs, des barres et des tubes,
- ladite extrusion étant conduite selon le mode opératoire usuel connu et utilisé par l'homme de métier pour extruder des polymères non thermotropes dans lequel la température de la matière polymère qui est choisie, aussi bien dans le corps de l'extrudeuse que dans la filière de calibrage, se situe à une valeur supérieure à la température de fusion du polymère (dans le cas d'un polymère thermotrope, cette valeur est située généralement dans la plage d'anisotropie),

conduit à des objets conformés dont la structure intime, même après refroidissement, est hautement fibrillaire en raison de l'orientation essentiellement uniaxiale des chaînes polymères dans la direction de l'écoulement de la matière ; en conséquence, de pareils objets extrudés, qui présentent une fragilisation transversale génératrice de phénomènes de délamination, ne peuvent pas convenir à une utilisation industrielle ultérieure.

Si, par exemple, c'est un jonc que l'on récupère en sortie de filière, on a constaté qu'il est encore impossible, sinon très difficile, d'obtenir :

- lorsque l'on réalise une opération de granulation dans les conditions conventionnelles connues et utilisées par l'homme de métier pour granuler un jonc en polymère non thermotrope, des granulés compacts de structure intime non fibrillaire qui permettent notamment la bonne réalisation d'une opération ultérieure de broyage ;
- lorsque l'on réalise une opération de broyage de ces granulés dans les conditions conventionnelles également connues et utilisées par l'homme de métier pour broyer des granulés à base de polymère non thermotrope, des poudres fines et coulables dont on connaît l'intérêt pour des applications telles que par exemple l'enduction électrostatique ou en lit fluidisé, la réalisation de composites thermoplastiques par moulage par compression. Les poudres à base de polymère thermotrope obtenues sont constituées de particules qui ne sont pas sphériques mais de forme aciculaire, et ces poudres constituent une bourre (ou

enchevêtrement) de micro-fibrilles non coulable, soit un ensemble de fibres de tailles très diverses également non coulable.

Dans un premier objet, la présente invention a justement pour but de fournir un procédé de production de poudres fines et coulables à partir de polymères thermotropes, qui est mis en oeuvre en enchaînant les opérations habituelles d'extrusion, de granulation et de broyage et en faisant appel aux appareillages ou dispositifs conventionnels connus et utilisés par l'homme de métier pour la transformation des polymères non thermotropes, mais en choisissant des conditions particulières de températures pour la conduite de l'extrusion.

Dans un deuxième objet, l'invention a pour but de proposer des granulés, en polymère thermotrope, compacts dont la structure intime n'est pas fibrillaire ; ces granulés sont susceptibles d'être obtenus par le procédé conforme au premier objet de l'invention.

Dans un troisième objet, l'invention a encore pour but de proposer des poudres fines et coulables, en polymère thermotrope, qui sont constituées de particules sphériques. Ces poudres sont susceptibles d'être obtenues par le procédé conforme au premier objet de l'invention.

Il a maintenant été trouvé que l'on pouvait atteindre l'ensemble des buts définis ci-avant grâce à la mise en oeuvre du procédé dont la définition va suivre.

Plus précisément, la présente invention, dans son premier objet, concerne un procédé de préparation de poudres fines et coulables à partir de polymères thermotropes qui sont capables de former des masses fondues anisotropes, ledit procédé consistant à enchaîner les opérations suivantes :

- une opération d'extrusion comprenant :

. la formation en extrudeuse d'une matière polymère à l'état fluide,

. le passage de la matière à l'état fluide au travers d'une filière sans poinçon de forme appropriée pour donner un ou plusieurs profilé(s) cylindrique(s) plein(s),

- suivie des opérations connues en soi de granulation et de broyage du (ou des) profilé(s) obtenu(s) à l'aide d'appareillages ou de dispositifs conventionnels pour obtenir les poudres souhaitées,

ledit procédé étant caractérisé en ce que pendant l'opération d'extrusion :

- le polymère thermotrope fondu à une température $T_1$ supérieure à la température de fusion $T_F$ à laquelle apparaît la phase de cristal liquide,

- est refroidi avant son entrée dans la filière de manière à atteindre, au plus tard au moment de l'entrée dans la filière, une température $T_2$ comprise entre une valeur qui est inférieure de 7° C à la température $T_F$ et une valeur minimale qui est égale à la température de cristallisation $T_c$,

- puis il est maintenu à ladite température $T_2$ pendant son passage au travers de la filière et, éventuellement, jusqu'à son entrée dans l'appareillage ou le dispositif de granulation.

Par "profilé cylindrique plein", on entend selon la présente invention décrire aussi bien des joncs éventuellement linéaires de section uniforme de formes variées que des barres éventuellement linéaires de section uniforme de formes variées. Un mode de réalisation préférentiel de l'invention consiste à produire des joncs linéaires ayant une section uniforme circulaire avec un diamètre allant par exemple de 2 à 6 mm.

A noter que l'on peut procéder sans inconvénient à un stockage à l'air ambiant du (ou des) profilé(s) obtenu(s) avant de l' (ou les) utiliser dans les opérations ultérieures de granulation et de broyage.

Par l'expression "extrudeuse", on entend désigner un appareil qui ne présente pas de zone morte lors de la progression de la matière. Des appareils de ce genre sont bien connus de l'homme de métier et ils peuvent comporter une ou plusieurs vis. Un mode de réalisation préférentiel de l'invention consiste à utiliser une extrudeuse dont la taille et les organes de malaxage sont étudiés de manière à ne pas induire un auto-échauffement de la matière polymère qui est travaillée. Comme exemples d'appareils utilisables, on citera les extrudeuses monovis disponibles dans le commerce sous les marques : BRABANDER, PRODEX, SAMAFOR et THORET ; les extrudeuses double-vis disponibles dans le commerce sous les marques : BUSS, ZSK et LEISTRITZ.

Les polymères thermotropes capables de former des masses fondues anisotropes qui conviennent pour la mise en oeuvre du procédé selon la présente invention, prise dans son premier objet, comprennent les polyesters totalement aromatiques, les polyesters alkylaromatiques, les polyesteramides totalement aromatiques, les polyesteramides alkylaromatiques, les polyazométhines aromatiques, les polyesters carbonates aromatiques et les mélanges de ces polymères.

Selon une modalité préférentielle de mise en oeuvre du procédé selon la présente invention, les polymères thermotropes auxquels on fait appel sont les polyesters totalement aromatiques, les polyesteramides totalement aromatiques et les mélanges de ces polymères.

Des polyesters totalement aromatiques thermotropes sont décrits par exemple : dans les brevets américains US-A-3.991.013, 3.991.014, 4.066.620, 4.075.262, 4.118.372, 4.130.545, 4.161.470, 4.181.792, 4.188.476, 4.219.461, 4.224.433, 4.230.817, 4.346.208 ; dans la demande de brevet européen EP-A-0.191.705 ; et dans la demande de brevet français FR-A-2.617.851 ; la substance de ces brevets ou demandes de brevets est incorporée ici en référence.

Des polyesteramides totalement aromatiques thermotropes sont décrits par exemple : dans les brevets américains US-A-4.272.625, 4.330.457, 4.339.375, 4.355.132 ; dans la demande de brevet européen EP-A-0.272.992 ; et dans les demandes de brevets français FR-A-2.617.851, 2.617.852 et 2.617.853 ; la substance de ces brevets ou demandes de brevets est incorporée ici aussi en référence.

Les polymères thermotropes qui sont choisis avantageusement pour la mise en oeuvre de la présente invention sont ceux, appartenant aux familles génerales ou préférées précitées, qui possèdent une température de fusion se situant dans l'intervalle allant de 200 °C à 370 °C et, de préférence, allant de 260 °C à 350 °C et qui présentent une viscosité inhérente au moins égale à 0,5 $dlg^{-1}$ et se situant préférentiellement dans l'intervalle allant de 1,0 à 4,0 $dlg^{-1}$. A propos de la viscosité inhérente, on précisera qu'elle est mesurée à 25 °C sur une solution renfermant 0,5 g de polymère pour 100 $cm^3$ de solvant(s) comme par exemple le mélange parachlorophénol/dichloro-1,2 éthane (50/50 en volume).

Des polyesters et des polyesteramides totalement aromatiques thermotropes qui sont tout spécialement préférés pour la mise en oeuvre de la présente invention sont ceux décrits dans les demandes de brevets européens EP-A-0.191.705 et 0.272.992. Ces polyesters et polyesteramides présentent les particularités suivantes :

- ils comprennent des unités de récurrence de formule (I), (II), (III) et (IV), la présence des unités (II) étant facultative :

(I) désignant la stucture :

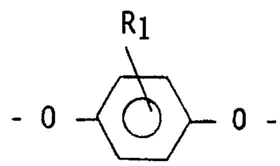

dans laquelle $R_1$ représente un radical méthyle ou éthyle ou un atome de chlore ou de brome, les unités (I) pouvant être identiques ou différentes entre elles,

(II) désignant la structure : 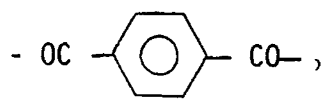

(III) désignant la structure : 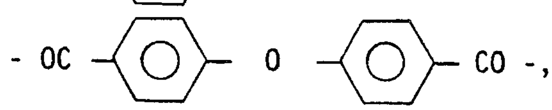

(IV) désignant la structure : 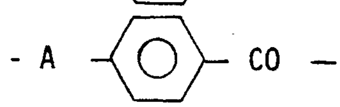

dans laquelle le symbole A représente un atome d'oxygène ou le groupement NH ;

- le rapport molaire des unités (I) par rapport à la somme des unités (II) + (III) se situe dans l'intervalle allant de 0,95 à 1,05 ;
- la quantité des unités (II) dans le mélange (II) + (III) se situe dans l'intervalle allant de 0 à 70 % en mole et celle des unités (III), par rapport à la même référence, se situe dans l'intervalle allant de 100 à 30 % en mole ;
- la quantité des unités (IV), exprimée par rapport à la quantité des unités (I), se situe dans l'intervalle allant, dans le cas où A = 0, de 10 à 300 % en mole et, dans le cas où A : NH, de 5 à 100 % en mole.

Selon une modalité encore plus spécialement préférentielle, les polyesters et polyesteramides totalement aromatiques thermotropes utilisables dans la présente invention présentent une structure telle que celle définie ci-avant dans laquelle :

- la quantité des unités (II) dans le mélange (II) + (III) se situe dans l'intervalle allant de 20 à 60 % en mole et celle des unités (III), par rapport à la même référence, va de 80 à 40 % en mole,
- et la quantité des unités (IV), exprimée par rapport à la quantité des unités (I), se situe dans l'intervalle allant, dans le cas où A = 0, de 30 à 200 % en mole et, dans le cas où A = NH, de 10 à 60 % en mole.

Parmi les polyesters et les polyesteramides aromatiques correspondant à cette modalité encore plus spécialement préférentielle, ceux qui conviennent bien sont les polymères présentant une structure dans

laquelle les unités (I) sont identiques, avec le substituant $R_1$ représentant un radical méthyle ou un atome de chlore.

Les polyesters et polyesteramides totalement aromatiques thermotropes tout spécialement préférés dont on vient de parler englobent aussi les polymères qui peuvent contenir en outre dans leur structure des unités aromatiques génératrices de fonctions esters et amides (unités dioxy et/ou unités dicarbonyle et/ou unités mixtes oxy/carbonyle ou amino-secondaire/carbonyle) ayant une structure autre que celle des unités (I), (II), (III) et (IV), la quantité totale de ces unités supplémentaires étant au plus égale à 10 % en mole par rapport à la quantité des unités (I). Une liste non limitative de ces unités supplémentaires est la suivante :

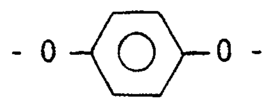 (I′)

et/ou 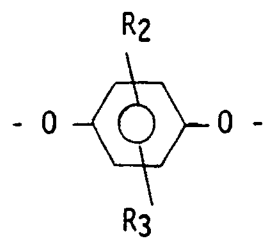 (I″)

où $R^2$ et $R_3$, qui peuvent être identiques ou différents, ont chacun la définition donnée ci-avant pour $R_1$, les unités (I″) pouvant être identiques ou différentes entre elles,

et/ou 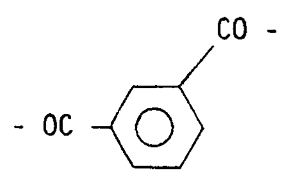 (II′)

et/ou 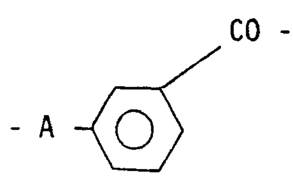 (IV′)

où le symbole A a la signification donnée ci-avant à propos des unités (IV).

Un autre type de polyesters et polyesteramides totalement aromatiques thermotropes qui sont aussi tout spécialement préférés pour la mise en oeuvre de la présente invention consiste dans les polymères décrits dans les brevets américains US-A-4.161.470 et 4.330.457 qui présentent les particularités suivantes :

. S'agissant des polyesters :

- ils comprennent des unités de récurrence de formule (V) et (VI) :

(V) désignant la structure : 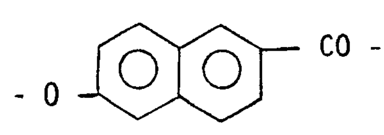 ,

(VI) désignant la structure : 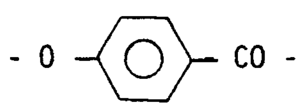 ,

- la quantité des unités (V) dans le mélange (V) + (VI) se situe dans l'intervalle allant de 10 à 90 % en mole et celle des unités (VI), par rapport à la même référence, se situe dans l'intervalle allant de 90 à 10 %

en mole ;

. S'agissant des polyesteramides :

- ils comprennent des unités de récurrence de formules (VII), (VIII) et (IX) :

(VII) désignant la structure : 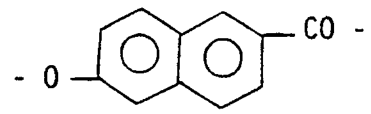 ,

(VIII) désignant la structure : 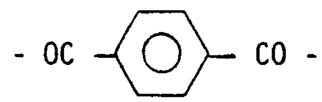 ,

(IX) désignant la structure : 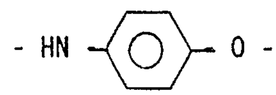 ou 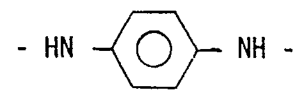 ,

- la quantité des unités (VII) dans le mélange (VII) + (VIII) + (IX) se situe dans l'intervalle allant de 10 à 90 % en mole, celle des unités (VIII), par rapport à la même référence, se situe dans l'intervalle allant de 5 à 45 % en mole et celle des unités (IX), par rapport à la même référence, se situe dans l'intervalle allant de 5 à 45 % en mole.

Parmi les polyesters et les polyesteramides totalement aromatiques appartenant à cet autre groupe de polymères tout spécialement préférés, ceux qui conviennent bien sont les polymères mis dans le commerce par la Société CELANESE, sous la marque déposée VECTRA, de type A 900 (polyester) ou B 900 (polyesteramide).

Comme on l'a déjà mentionné ci-dessus lors de la définition de la présente invention, prise dans son premier objet, une condition essentielle pour la mise en oeuvre du procédé envisagé ici consiste dans l'établissement dans l'extrudeuse de conditions de températures particulières.

La température $T_1$ est choisie de manière à éviter toute hétérogénéité de phase dans la masse fondue. Cette température est fonction du taux et de la durée de cisaillement, mais elle est au moins supérieure de 5° C à la température de fusion $T_F$ à laquelle apparaît la phase de cristal liquide. L'écart entre $T_1$ et $T_F$ est d'autant plus élevé que l'aptitude à la cristallisation du polymère est plus élevée et que les débits d'extrusion sont plus importants. De préférence, le polymère thermotrope est fondu à une température $T_1$ comprise entre une valeur supérieure de 5° C à $T_F$ et la température de clarification $T_{cl}$, en veillant toutefois à ne pas dépasser pour $T_1$ une valeur égale à $T_F$ + 50° C. La différence $T_{cl}$ - $T_F$ est variable selon le type de polymère, et elle peut atteindre de façon courante 20 à 60° C.

Le refroidissement de la masse fondue à la température $T_2$ est réalisé de façon homogène, c'est-à-dire que non seulement les couches superficielles mais encore la totalité de la veine à l'état fluide doivent se trouver portées, au plus tard au moment de l'entrée dans la filière, à la température de refroidissement choisie. Les conditions de refroidissement et le débit d'extrusion doivent en outre être contrôlées de manière à éviter un auto-échauffement de la matière polymère. En particulier, la température de l'extrudat fondu ne doit pas être abaissée à une température inférieure à la température de cristallisation $T_c$. Il est essentiel que le refroidissement ait lieu avant l'entrée dans la filière pour que la totalité de la veine à l'état fluide puisse être à la température $T_2$ choisie quand ladite veine passe au travers de la filière. De préférence, la température $T_2$ est choisie comprise entre une valeur qui est inférieure de 7° C à la température $T_F$ et une valeur qui est supérieure de 10° C à la température de cristallisation $T_c$. La différence $T_F$ - $T_c$ est variable et elle peut se situer entre 20 et 40° C. De manière plus préférentielle encore, la température $T_2$ est choisie comprise entre une valeur qui est inférieure de 7° C à la température $T_F$ et une valeur qui est supérieure de 15° C à la température $T_c$.

Dans le cas où l'amplitude du refroidissement n'est pas très importante, par exemple de l'ordre de quelques degrés à une trentaine de degrés, on peut réaliser le refroidissement en jouant sur le débit du matériau à extruder. Il est encore possible de faire appel à une extrudeuse équipée d'une vis de grande longueur dans laquelle le matériau fondu se refroidit en progressant vers le bout de la vis.

Selon un autre mode de réalisation, le refroidissement à la température désirée est effectué avant le passage dans la filière à l'aide d'un dispositif refroidisseur-homogénéiseur intercalé entre l'extrémité du fourreau de l'extrudeuse et la filière de calibrage. Un type de dispositif simple, utilisable pour la mise en

oeuvre de l'invention, peut être trouvé dans les mélangeurs statiques ou dynamiques qui offrent l'avantage de permettre un échange thermique efficace et homogène sans perte de charge élevée et de pouvoir être adaptés, par un choix convenable du nombre, de la géométrie et de la température des éléments, à l'amplitude du refroidissement à réaliser. On trouvera plus de détails sur ce dispositif dans le brevet français FR-A-2.373.385.

Revenons maintenant au(x) profilé(s) cylindrique(s) plein(s) qui est(sont) obtenu(s) à la sortie de la filière. Chaque profilé est caractérisé en ce qu'il présente une structure intime isotrope (pouvant être faiblement anisotrope) non fibrillaire. Il correspond audit état isotrope (pouvant être faiblement anisotrope) un taux d'orientation cristalline fc qui est égal ou inférieur à 0,3 ; cette mesure du taux d'orientation cristalline fc est effectuée par diffraction aux rayons X sur un appareil PHILIPPS PW 1130/1300 selon la méthode décrite dans l'ouvrage "Principles of Polymer Processing" de Z. TADMOR et C.G. GOGOS, publié par les éditions J. WILEY AND SONS en 1979, pages 77 à 80 ; on rappelle qu'un taux fc égal à 1 correspond à une structure intime totalement anisotrope (ou structure parfaitement orientée), tandis qu'un taux fc égal à zéro correspond à une structure intime totalement isotrope (ou structure parfaitement désorientée).

A la sortie de la filière, le (ou les) profilé(s) obtenu(s) est (ou sont) généralement déjà défini(s) sur une ou deux dimension(s) et prêt(s) à être coupé(s) sous forme de granulés aux dimensions appropriées de formes cylindriques ou même cubiques.

Dans le cas où les profilés issus de la filière sont des produits durs, on peut les découper directement à la sortie de l'extrudeuse avec par exemple des couteaux rotatifs qui affleurent la filière, un balayage d'air refroidissant les granulés et évitant le collage des grains entre eux. Dans le cas où les profilés issus de la filière sont des produits mous, ils sont refroidis par exemple par circulation dans un bac d'eau installé entre l'extrudeuse et le granulateur. Les granulateurs ont généralement la forme de broyeurs simples avec grilles ou sont munis de lames découpées en peignes ; leur vitesse ne doit pas être trop élevée pour éviter les échauffements de la matière et la prise en masse.

Le produit de cette opération de granulation consiste dans des granulés compacts. Si, par exemple, c'est un jonc linéaire, ayant une section uniforme circulaire avec un diamètre allant de 2 à 6 mm, qui est extrudé, on peut obtenir alors par granulation des granulés compacts ayant des dimensions par exemple comprises dans une direction entre 2 mm et 6 mm et dans l'autre direction entre 2 mm et 12 mm.

La présente invention, dans son deuxième objet, concerne aussi de pareils granulés en tant que produit-per-se, c'est-à-dire indépendamment du procédé décrit jusqu'ici qui est susceptible de servir à les préparer.

Ces granulés compacts en polymère thermotrope sont caractérisés en ce qu'ils présentent chacun une structure intime également isotrope (pouvant être faiblement anisotrope) non fibrillaire. Il correspond là aussi audit état isotrope (pouvant être faiblement anisotrope) de leur structure un taux d'orientation cristalline qui est égal ou inférieur à 0,3.

Ces granulés permettent la bonne réalisation de l'opération ultérieure de broyage dans des conditions tout à fait conventionnelles. Le produit du broyage est un poudre fine et coulable dont les dimensions de particules vont dépendre, de manière connue en soi, par exemple du choix du type de broyeur, de la vitesse de fonctionnement, de la durée de la mouture et du nombre de passages dans le broyeur.

La présente invention, dans son troisième objet, concerne justement de pareilles poudres en tant que produit-per-se également.

Ces poudres fines et coulables en polymère thermostrope sont caractérisées en ce que d'une part elles sont constituées de particules de forme sphérique et d'autre part lesdites particules présentent chacune là aussi une structure intime isotrope (pouvant être faiblement anisotrope) non fibrillaire. Il correspond audit état isotrope (pouvant être faiblement anisotrope) de la structure de leurs particules un taux d'orientation cristalline qui est toujours égal ou inférieur à 0,3.

A l'issue du procédé conforme à l'invention, prise dans son premier objet, il est possible d'obtenir des poudres fines et coulables dont les diamètres de particules sont aussi faibles que ceux allant de 5 à 30 µm. De pareils diamètres de particules allant de 5 à 30 µm demandent de réaliser l'opération finale de broyage dans des appareils opérant de préférence par percussion comme par exemple : les broyeurs à masses de percussion rotatives rigides sur axe vertical ou sur axe horizontal, les broyeurs à marteaux articulés, les broyeurs à broches, taquets ou croisillons, les broyeurs à chute libre, les broyeurs à tuyère ou broyeurs à jet (éventuellement à lit fluidisé) utilisant un fluide (notamment de l'air) sous pression comme élément de transmission de force ; une méthode de broyage tout particulièrement préférée consiste à combiner une opération de broyage dans un appareil du type précité avec une opération complémentaire dans un autre appareil du type précité, et on citera en particulier à cet égard la combinaison : broyeur à broches puis broyeur à jet d'air à lit fluidisé.

L'exemple qui suit est donné à titre non limitatif et il montre comment la présente invention peut être mise en pratique.

EXEMPLE ET ESSAIS COMPARATIFS :

1. Description du polymère thermotrope utilisé :

On prépare un copolyester aromatique du type de celui décrit dans la demande de brevet européen EP-A-0.191.705.

Dans un réacteur de polycondensation de 300 litres agité et chauffé par un fluide caloporteur circulant dans la double enveloppe du réacteur, muni d'un dispositif de distillation et de balayage par un gaz inerte, on introduit les réactifs suivants :

(1) diacétate de méthylhydroquinone : 67,10 kg
rapport molaire (1)/(2) + (3) = 1
(2) acide téréphtalique : 26,77 kg
50 % en mole dans mélange (2) + (3)
(3) dicarboxy-4,4′ diphényléther : 41,61 kg
50 % en mole dans mélange (2) + (3)
(4) acide para-acétoxybenzoïque : 34,84 kg
60 % en mole par rapport à (1).

Le réacteur est purgé à l'azote, puis chauffé par le fluide caloporteur réglé à 260 °C pendant 2 heures ; cette température est portée ensuite à 300 °C pendant 20 minutes. La quantité d'acide acétique distillé est de 42,82 kg (soit 85 % de la théorie). On élève ensuite progressivement la température du fluide caloporteur jusqu'à 310 °C en 60 minutes, en diminuant dans le même temps la pression de $1010.10^2$ Pa à $2,66.10^2$ Pa. On maintient encore la température de 310 °C et la pression de $2,66.10^2$ pendant 10 minutes ; la quantité d'acide acétique recueilli lors de cette étape est de 7,55 kg (soit au total 100 % de la théorie).

L'agitation est ensuite arrêtée, puis on établit dans le réacteur une pression d'azote et on soutire le polymère à 310 °C au travers d'une vanne circulaire de 8 mm de diamètre. Le polymère obtenu est récupéré sous forme d'un jonc grisâtre, de section non uniforme plus ou moins circulaire, ayant une structure fibrillaire ; ce jonc est refroidi par immersion sur une longueur de 2 mètres dans de l'eau maintenue à 17 °C, puis il est découpé en granulés non compacts (ils ont une structure intime fibrillaire) de forme et de dimensions hétérogènes à l'aide d'un granulateur disponible dans le commerce sous la marque AUTOMATIC.

Le polymère obtenu possède une viscosité inhérente de 1,93 $dlg^{-1}$ (solvants : parachlorophénol/dichloro-1,2 éthane, 50/50 en volume). La température de cristallisation $T_c$ est égale à 267 °C. La température de fusion $T_F$ à laquelle apparaît la phase cristal liquide est égale à 300 °C. La température de clarification $T_{cl}$ au delà de laquelle la mésophase devient isotrope est supérieure à 350 °C.

2. Préparation des granulés compacts conformes à l'invention :

On extruse le polymère thermotrope dans une extrudeuse à double vis corotatives de marque LEISTRITZ comportant des vis ayant chacune un diamètre D égal à 34 mm et une longueur égale à 35 D.

Cette extrudeuse est équipée de 10 zones de chauffage du fourreau et d'une filière équipée d'un trou circulaire de 4mm de diamètre.

Le profil des températures de la matière extrudée le long du fourreau est équilibré, dans les conditions de marche régulière, comme indiqué ci-après :

- extrudeuse :
. première partie où a lieu la fusion : elle correspond aux zones 1 à 4 où la température atteint 320 °C (température $T_1$) ;
. seconde partie où a lieu le refroidissement :
* elle correspond aux zones 5 à 9 où la température passe progressivement de 320 °C à 290 °C,
* puis à la zone 10 où la température est stabilisée à 290 °C (température $T_2$) ;
- filière : 290 °C.

La vitesse de rotation des vis est fixée à 100 tours/minute et le débit matière est de l'ordre de 10 kg/heure.

A la sortie de la filière, le jonc obtenu, qui présente une section uniforme circulaire ayant un diamètre de 4 mm, est refroidi par un parcours dans l'air de 5 mètres, puis il est découpé en granulés compacts présentant chacun un diamètre de 4 mm et une longueur de l'ordre de 5 mm, en utilisant un granulateur à couteaux rotatifs de marque COSTE-CHEVALEYRE, type CJ-15-F.

3. Préparation d'une poudre fine et coulable conforme à l'invention :

L'opération finale de broyage est réalisée en enchaînant les deux étapes suivantes :
- une première étape dans laquelle les granulés compacts obtenus subissent un pré-broyage en opérant dans un broyeur par percussion à broches disponible dans le commerce sous la marque ALPINE, type 160 Z : la vitesse (linéaire) de rotation de cet appareil est de 1,75 m/seconde et le débit de poudre est de l'ordre de 30 kg/heure ;
- une seconde étape dans laquelle la poudre issue du pré-broyage précédent est ensuite reprise dans un broyeur à jet d'air à lit fluidisé disponible dans le commerce sous la marque ALPINE type AFG 200 : le broyage est effectué avec une pression d'air de $6.10^5$ Pa, avec une vitesse de sélecteur de 9 000 tours/minute et un débit d'alimentation produit de 40 kg/heure.

4. Essais comparatifs A à C :

A titre d'essais comparatifs, on a reproduit les mêmes opérations de celles décrites ci-avant aux paragraphes 1 à 3, mais en modifiant dans la conduite de l'extrusion le profil des températures de la matière extrudée. Plus précisément :
- dans l'essai A : le polymère thermotrope fondu à la température $T_1$ ne subit aucun refroidissement avec son entrée dans la filière (la température $T_2$ reste alors égale à $T_1$ ;
- dans l'essai B : le polymère thermotrope est porté à une température $T_1$ qui n'est pas supérieure à la température de fusion $T_F$ ;
- dans l'essai C : le polymère thermotrope est porté à la température $T_1$ adéquate, mais on opère un refroidissement insuffisant de sorte que la température $T_2$ n'est pas amenée à une valeur qui est au moins inférieure de 7° C à la température $T_F$.

5. Contrôles et mesures affectués :

Dans chacun des exemples et essais réalisés, on effectue, tant au niveau du jonc extrudé qu'à celui des granulés et de la poudre, les contrôles et mesures suivants :
- observations visuelles et à l'aide d'un microscope de la structure intime : elle est fibrillaire (= F) ou non fibrillaire (= NF) ;
- mesure du taux d'orientation cristalline fc.

En ce qui concerne la poudre, on examine en plus :
- la forme des particules qui la constitue : cette forme est sphérique (=S) ou aciculaire (= A) ;
- et sa granulométrie à l'aide d'un granulomètre Laser à diffraction commercialisé sous la marque MALVERN ; on donnera l'intervalle en µm dans lequel se situent les diamètres de particules (= d), avec dans le cas des particules aciculaires une indication à propos de leur longueur moyenne (= 1 moy).

Dans le tableau suivant sont reportés les résultats des contrôles et mesures effectués :

| EXEMPLE/ESSAI | TEMPERATURE D'EXTRUSION | | | JONC, GRANULES ET POUDRES | | POUDRE | |
|---|---|---|---|---|---|---|---|
| | T1 | T2 | Filière | Structure | Taux d'orientation | Forme des particules | Granulométrie |
| 1 | 320° C | 290° C | 290° C | NF | 0,28 | S | 10-20 µm |
| A | 310° C | 310° C | 310° C | F | 0,95 | A | 500-800 µm 1moy ~ 3d |
| B | 280° C | 280° C | 280° C | F | 0,70 | A | 500-800 µm 1moy ~ 3d |
| C | 320° C | 295° C | 295° C | F | 0,40 | A | 300-600 µm 1moy ~ 2d |

**Revendications**

1/ Procédé de préparation de poudres fines et coulables à partir de polymères thermotropes qui sont capables de former des masses fondues anisotropes, ledit procédé consistant à enchaîner les opérations suivantes :
- une opération d'extrusion comprenant :
. la formation en extrudeuse d'une matière polymère à l'état fluide,
. le passage de la matière à l'état fluide au travers d'une filière sans poinçon de forme appropriée pour donner un ou plusieurs profilé(s) cylindrique(s) plein(s),
- suivie des opérations connues en soi de granulation et de broyage du (ou des) profilé(s) obtenu(s) à l'aide d'appareillages ou de dispositifs conventionnels pour obtenir les poudres souhaitées,
ledit procédé étant caractérisé en ce que pendant l'opération d'extrusion :
- le polymère thermotrope fondu à une température $T_1$ supérieure à la température de fusion $T_F$ à laquelle apparaît la phase de cristal liquide,
- est refroidi avant son entrée dans la filière de manière à atteindre, au plus tard au moment de l'entrée dans la filière, une température $T_2$ comprise entre une valeur qui est inférieure de 7° C à la température $T_F$ et une valeur minimale qui est égale à la température de cristallisation $T_c$,
- puis il est maintenu à ladite température $T_2$ pendant son passage au travers de la filière et, éventuellement, jusqu'à son entrée dans l'appareillage ou le dispositif de granulation.
2/ Procédé selon la revendication 1, caractérisé en ce que les polymères thermotropes qui conviennent sont les polyesters totalement aromatiques, les polyesters alkylaromatiques, les polyesteramides totalement aromatiques, les polyesteramides alkylaromatiques, les polyazométhines aromatiques, les polyesters carbonates aromatiques et les mélanges de ces polymères.
3/ Procédé selon la revendication 2, caractérisé en ce que les polymères thermotropes auxquels on fait appel sont les polyesters totalement aromatiques, les polyesteramides totalement aromatiques et les mélanges de ces polymères.
4/ Procédé selon l'une quelconque des revendications 1 et 2, caractérisé en ce que les polymères thermotropes possèdent une température de fusion se situant dans l'intervalle allant de 260° C à 350° C et présentant une viscosité inhérente se situant dans l'intervalle allant de 1 à 4 $dlg^{-1}$.
5/ Procédé selon l'une quelconque des revendications 1 à 4, caractérisé en ce que :
- le polymère thermotrope est fondu à une température $T_1$ comprise entre une valeur supérieure de 5° C à la température $T_F$ (à laquelle apparaît la phase cristal liquide) et la température de clarification $T_{cl}$, en veillant toutefois à ne pas dépasser pour $T_1$ une valeur égale à $T_F$ + 50° C ;
- puis est refroidi avant son entrée dans la filière de manière à atteindre, au plus tard au moment de l'entrée dans la filière, une température $T_2$ comprise entre une valeur qui est inférieure de 7° C à la température $T_F$ et une valeur qui est supérieure de 10° C à la température de cristallisation $T_c$.
6/ Granulés compacts faits à partir de polymères thermotropes capables de former des masses fondues anisotropes, lesdits granulés étant susceptibles d'être obtenus intermédiairement dans le procédé selon l'une quelconque des revendications 1 à 5, caractérisés en ce qu'ils présentent chacun une structure intime isotrope (pouvant être faiblement anisotrope) non fibrillaire.
7/ Granulés selon la revendication 6, caractérisés en ce qu'il correspond à l'état isotrope (pouvant être faiblement anisotrope) de leur structure un taux d'orientation cristalline fc qui est égal ou inférieur à 0,3.

8/ Poudres fines et coulables faites à partir de polymères thermotropes capables de former des masses fondues anisotropes, lesdites poudres étant susceptibles d'être obtenues à l'issue du procédé selon l'une quelconque des revendications 1 à 5, caractérisées en ce que d'une part elles sont constituées de particules de forme sphérique et d'autre part lesdites particules présentent chacune là aussi une structure intime isotrope (pouvant être faiblement anisotrope) non fibrillaire.

9/ Poudres selon la revendication 8, caractérisées en ce qu'il correspond à l'état isotrope (pouvant être faiblement anisotrope) de la structure de leurs particules un taux d'orientation cristalline fc qui est égal ou inférieur à 0,3.

Office européen des brevets

# RAPPORT DE RECHERCHE EUROPEENNE

Numero de la demande

EP 90 42 0479

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 277 121 (TEIJIN LTD)<br>* Très spécialement page 8, ligne 8 - page 11, ligne 16; revendications 1-5 * | 1-9 | B 29 B 13/10<br>C 08 J 03/12 |
| Y | FR-A-2 223 427 (TEIJIN LTD)<br>* En entier * | 1-9 | |
| A | DE-A-3 332 629 (HERMANN BERSTORFF MASCHINENBAU GmbH UND NPO NORPLAST)<br>* Revendications 1-3,7; page 10, lignes 14-21; page 13, ligne 26 - page 15, ligne 34 * | 1,6,8 | |
| A | US-A-3 585 259 (E.B. LEFFERTS et al.) | 1-9 | |
| A | DE-B-1 128 120 (V.E.B. THÜRINGISCHES KUNSTFASERWERK "WILHELM PIECK") | 1-3,5-9 | **DOMAINES TECHNIQUES RECHERCHES (Int. Cl.5)**<br>B 29 B<br>C 08 J |

Le présent rapport a été établi pour toutes les revendications

| Lieu de la recherche | Date d'achèvement de la recherche | Examinateur |
|---|---|---|
| LA HAYE | 12-02-1991 | MOLTO PINOL F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)